# FASCICULE DE BREVET EUROPEEN

(11) **EP 1 026 804 B1**
(45) Date de publication et mention de la délivrance du brevet: **01.07.2009**
(21) Numéro de dépôt: 00400214.3
(22) Date de dépôt: 27.01.2000
(51) Int. Cl.: H02G 3/30

(54) **Support de goulotte pour goulotte à décaler d'un mur**
Stützvorrichtung für Kabelrinne in einer zur Wand versetzten Stellung
Support for a raceway to be mounted offset from a wall

(30) Priorité: 05.02.1999 FR 9901349
(43) Date de publication de la demande: 09.08.2000
(73) Titulaire: LEGRAND, 87000 Limoges (FR); LEGRAND SNC, 87000 Limoges (FR)
(72) Inventeur: Rayon, Jacky, 53600 Voutre (FR)
(74) Mandataire: Santarelli

(56) Documents cités:
- EP-A- 0 277 344
- EP-A- 0 446 475
- WO-A-86/06887

## Description

La présente invention concerne d'une manière générale les goulottes du type de celles mises en oeuvre pour le logement et la protection de divers appareillages, et, notamment, d'appareillages électriques, ainsi que pour le logement et la protection des conducteurs ou autres canalisations nécessaires à la desserte de ces appareillages.

Par goulotte on entend, ici, de manière usuelle, un profilé, assez communément appelé profilé électrique, comportant, d'une part, un socle, dont la section transversale est ouverte, et par lequel l'ensemble est adapté à être rapporté sur un quelconque support, et, d'autre part, un couvercle, qui, pour la fermeture de l'ensemble, est adapté à être rapporté sur le socle, par exemple par encliquetage.

Le plus souvent, une telle goulotte est directement rapportée sur un mur, sa pose se faisant par exemple en plinthe à la base de celui-ci.

La présente invention concerne plus précisément le cas où, pour le contournement d'un quelconque obstacle, et, notamment, pour le contournement d'un quelconque appareil de chauffage, tel que radiateur ou autre, qu'il s'agit, corollairement, de cacher et d'habiller, la pose de cette goulotte doit au contraire se faire au moins localement de manière décalée par rapport à un tel mur.

Des supports spécifiques sont alors mis en oeuvre à cet effet.

L'une des difficultés à surmonter dans la réalisation de ces supports, tient en particulier à ce que la distance de pose de la goulotte par rapport au mur doit pouvoir être réglée, en fonction notamment de l'épaisseur de l'obstacle à contourner, et en ce qu'il en est le plus souvent de même en ce qui concerne sa hauteur de pose par rapport au sol.

Une autre de ces difficultés tient à ce que les goulottes susceptibles d'être concernées peuvent elles-mêmes varier en largeur ou hauteur, et/ou en profondeur.

Le plus souvent, à ce jour, les supports mis en oeuvre sont de simples consoles, qui interviennent en porte à faux à compter du mur.

Cela est le cas, par exemple, dans le brevet allemand No 33 47 227, dans lequel sont proposées des consoles en deux parties permettant un réglage de la distance de pose entre le mur et la goulotte.

Cela est le cas, également, dans la demande de brevet européen No 0 446 475, dans laquelle sont proposées des consoles permettant en outre un réglage de la hauteur de pose par rapport au sol.

Les supports de ce type ont pour principal inconvénient un temps de mise en oeuvre relativement important, parce que, pour une pose à niveau de l'ensemble, il faut procéder à une pose et à un réglage particulièrement soignés de chacune des consoles prises individuellement.

En outre, l'adaptation des supports de ce type à des goulottes de largeur ou hauteur et/ou d'épaisseur variables est le plus souvent problématique.

Ces inconvénients subsistent lorsque, comme décrit dans la demande de brevet européen No 0 229 079, à chaque console est adjointe une console auxiliaire, qui, attelée de manière provisoire à la précédente, a pour simple but de soutenir la goulotte le temps de sa fixation à cette dernière.

Ces inconvénients subsistent également lorsque, comme décrit, par exemple, dans le brevet européen No 0 375 607 et dans le brevet américain No 4 874 322, les consoles, au lieu d'être directement fixées au mur, sont rapportées sur des crémaillères elles-mêmes rapportées sur celui-ci.

II est cependant maintenant proposé sur le marché des supports permettant d'éviter la plupart de ces inconvénients.

Par exemple, dans le document EP 0 277 344 un support comporte un pied présentant deux branches qui forment un dièdre entre elles, à savoir une branche de support, pour appui sur le sol, et une branche d'écartement, pour appui sur le mur, et des moyens de fixation propres à permettre d'assujettir à ce pied une goulotte.

Globalement, dans les réalisations comportant de tels supports connues à ce jour, les moyens de fixation mettent en oeuvre une sorte de caisson, qui intervient en redan à la jonction entre la branche de support et la branche d'écartement, en étant fermé à sa partie supérieure par un volet articulé, et qui, par ses dimensions, est apte à recevoir des goulottes de largeur ou hauteur et/ou d'épaisseur variables.

Mais, à ce jour, les supports de ce type sont relativement lourds et encombrants, et leur mise en oeuvre reste relativement complexe.

La présente invention a d'une manière générale pour objet une disposition permettant d'éviter ces inconvénients et conduisant en outre à d'autres avantages.

De manière plus précise, elle a pour objet un support de goulotte du genre comportant un pied présentant deux branches qui forment un dièdre entre elles, à savoir une branche de support, pour appui sur le sol, et une branche d'écartement, pour appui sur un mur, et des moyens de fixation propres à permettre d'assujettir à ce pied une goulotte et qui interviennent sur la branche de support de ce pied, ce support de goulotte étant d'une manière générale caractérisé en ce que les moyens de fixation comportent une console apte à être rapportée en façade sur la branche de support du pied.

Ainsi, suivant l'invention, au lieu d'être reçue dans un caisson, la goulotte est en quelque sorte suspendue à la branche de support du pied mis en oeuvre.

Outre un allégement substantiel de ce pied, cette disposition permet au pied de recevoir sans difficulté des goulottes de largeur ou hauteur variable, l'assujettissement de la goulotte étant réalisé facilement.

Elle permet en outre déjà par elle-même un ajustement de la hauteur de pose de la goulotte par rapport au sol.

Pour parfaire, ou compléter, cet ajustement, l'une au moins des branches du pied, et, en l'espèce, sa branche de support, se prolonge, suivant un développement de l'invention, par un embout monté réglable en position sur une telle branche suivant la longueur de celle-ci.

Préférentiellement, chacune des branches du pied se prolonge par un tel embout.

Ainsi, s'agissant de la branche de support, il est possible d'ajuster plus aisément la hauteur de pose de la goulotte par rapport au sol, et, s'agissant de sa branche d'écartement, il est possible d'ajuster la distance de pose de cette goulotte par rapport au mur.

Préférentiellement, également, les deux embouts ainsi mis en oeuvre sont identiques l'un à l'autre, au bénéfice d'une simplification des fabrications.

En bref, le support de goulotte suivant l'invention permet, aisément, et avec une grande souplesse, une variation possible de la hauteur de pose de la goulotte par rapport au sol et/ou de sa distance de pose par rapport au mur.

Il se prête en outre avantageusement à la mise en oeuvre de supports de lamelle(s) qui, intervenant tant sur sa branche de support que sur sa branche d'écartement, forment, globalement, de part et d'autre de la goulotte, et quelles que soient la largeur ou hauteur de cette goulotte et/ou la profondeur de celle-ci, un habillage soigné et régulier, au bénéfice de l'esthétique de l'ensemble.

Enfin, la mise en oeuvre du support de goulotte suivant l'invention est avantageusement facile et rapide.

Les caractéristiques et avantages de l'invention ressortiront d'ailleurs de la description qui va suivre, à titre d'exemple, en référence aux dessins schématiques annexés sur lesquels :
la figure 1 est une vue de côté d'un support de goulotte suivant l'invention, représenté en place avec un socle de goulotte de dimensions données ;
la figure 2 est une vue en perspective éclatée de ce support de goulotte;
la figure 3 est, à échelle supérieure, une vue partielle de côté du pied que comporte ce support de goulotte ;
la figure 4 est une vue partielle de face de ce pied, suivant la flèche IV de la figure 3 ;
la figure 5 en est une vue en coupe transversale, suivant la ligne V-V de la figure 4 ;
la figure 6 est, à échelle différente, une vue en perspective d'un des embouts associés au pied du support de goulotte suivant l'invention, vu de l'arrière ;
la figure 7 est, à échelle également différente, une vue en perspective d'une console appartenant aux moyens de fixation que comporte le support de goulotte suivant l'invention, vue de dessus ;
la figure 8 est, à échelle également différente, une vue en perspective d'un premier support de lamelle(s) associé au support de goulotte suivant l'invention, vu de dessus ;
la figure 9 est, à échelle supérieure, une vue partielle de côté de ce support de lamelle(s), suivant la flèche IX de la figure 8 ;
la figure 10 est une vue en perspective d'un autre support de lamelle(s) associé au support de goulotte suivant l'invention ;
la figure 11 est, à échelle différente, une vue de bout d'une lamelle susceptible d'être mise en oeuvre avec le support de goulotte suivant l'invention ;
la figure 12 est une vue de bout analogue à celle de la figure 11, pour une autre lamelle ;
la figure 13 est une vue de côté analogue à celle de la figure 1, pour un socle de goulotte de dimensions différentes de celles du socle de goulotte précédent ;
la figure 14 est une vue partielle de côté analogue à celles des figures 1 et 13, pour une variante de mise en oeuvre du support de goulotte suivant l'invention ;
la figure 15 est, à échelle différente, une vue en perspective d'une entretoise intervenant dans cette variante de mise en oeuvre, vue de l'avant ;
la figure 16 est une vue partielle de côté analogue à celle de la figure 14, pour un socle de goulotte de dimensions différentes de celles du socle de goulotte représenté sur cette figure 14.

Tel qu'illustré sur ces figures, il s'agit, globalement, d'assurer la pose d'une goulotte 10 de manière décalée par rapport à un mur 11.

Plus précisément, il s'agit, dans les formes de mise en oeuvre représentées, d'assurer cette pose à une distance D du mur 11 et à une hauteur H par rapport au sol 12.

Sur les figures, la goulotte 10 est représentée par son seul socle 13.

Il va de soi, cependant, qu'elle se complète par un couvercle non représenté.

Cette goulotte 10 ne relevant de toute façon pas, par elle-même, de la présente invention, elle ne sera pas décrite dans tous ses détails ici.

Il suffira d'indiquer que, dans les formes de réalisation représentées, son socle 13 a, en section transversale, un profil en U, avec un fond 14, qui, extérieurement, est plat, et deux ailes latérales 15, qui, de même hauteur, s'étendent sensiblement perpendiculairement au fond 14 et présentent, chacune, le long de leur bord libre, pour l'encliquetage du couvercle associé, un retour 16, dirigé vers l'intérieur et parallèle à ce fond 14.

Soit L la largeur ou hauteur de la goulotte 10 mesurée de l'une à l'autre des ailes latérales 15 de son socle 13, et soit P sa profondeur mesurée des retours 16 de ces ailes latérales 15 au fond 14 associé.

En pratique, la goulotte 10 doit s'étendre sensiblement parallèlement au mur 11 et sensiblement parallèlement au sol 12.

Sa distance de pose D par rapport au mur 11 est appréciée à compter du fond 14 de son socle 13, et sa hauteur de pose H par rapport au sol 12 est appréciée à compter de l'aile latérale 15 inférieure de ce socle 13.

Pour le support et le maintien de la goulotte 10 il est mis en oeuvre au moins un support de goulotte 18.

Mais, si nécessaire, plusieurs supports de goulotte 18 peuvent être prévus, en étant échelonnés, de place en place, le long de la goulotte 10.

En pratique, ces supports de goulotte 18 sont alors tous identiques entre eux, et il suffira donc d'en décrire un dans ce qui suit.

De manière connue en soi, un tel support de goulotte 18 comporte, globalement, d'une part, un pied 20 présentant deux branches 20A, 20B qui forment un dièdre entre elles, à savoir une branche de support 20A, pour appui sur le sol 12, et une branche d'écartement 20B, pour appui sur le mur 11, et, d'autre part, des moyens de fixation 21 propres à permettre d'assujettir à ce pied 20 une goulotte 10.

Suivant l'invention, ces moyens de fixation 21, qui seront décrits plus en détail ultérieurement, interviennent sur la branche de support 20A du pied 20.

Dans la forme de réalisation représentée, les deux branches 20A, 20B du pied 20 sont d'un seul tenant l'une avec l'autre, et le dièdre qu'elles forment entre elles est un dièdre droit.

Autrement dit, ces deux branches 20A, 20B sont d'équerre l'une avec l'autre.

En pratique, la branche de support 20A a une longueur largement supérieure à celle de la branche d'écartement 20B.

Le pied 20 a ainsi, globalement, une configuration en L, ou, plus exactement, une configuration en L renversé.

Dans la forme de réalisation représentée, chacune des branches 20A, 20B du pied 20 comporte, suivant un profil en U, une paroi de façade 22A, 22B et deux ailes latérales 23A, 23B, avec, échelonnés sur sa longueur sur chacune de ces ailes latérales 23A, 23B, pour des raisons qui apparaîtront ultérieurement, une pluralité d'évidements, tels que des perçages 24 ou des boutonnières 25, propres chacun au passage d'un quelconque organe de fixation, en l'espèce une vis 26.

En pratique, dans la forme de réalisation représentée, seuls des perçages 24, c'est-à-dire des trous ronds, sont prévus, de place en place, sur les ailes latérales 23B de la branche d'écartement 20B.

Il en est de même, pour l'essentiel, mais avec des écarts variables, pour les ailes latérales 23A de la branche de support 20A.

Toutefois, à chacune des extrémités de celles-ci, il est substitué, à de tels perçages 24, une ou plusieurs boutonnières 25, de longueur également variable.

En pratique, également, la concavité du profil des branches 20A, 20B du pied 20 est tournée vers l'intérieur, c'est-à-dire vers le mur 11 pour ce qui concerne la branche de support 20A et vers le sol 12 pour ce qui concerne la branche d'écartement 20B.

Le pied 20 ainsi constitué est, par exemple, réalisé en métal, par découpe et pliage appropriés d'un flan initialement plat.

Dans la forme de réalisation représentée, l'une au moins des branches 20A, 208 du pied 20 se prolonge par un embout 28A, 28B monté réglable en position sur une telle branche 20A, 20B suivant la longueur de celle-ci.

Préférentiellement, et cela est le cas dans la forme de réalisation représentée, chacune des branches 20A, 20B du pied 20 se prolonge par un embout 28A, 28B, et, d'une de ces branches 20A, 20B à l'autre, les deux embouts 28A, 28B ainsi mis en oeuvre sont identiques l'un à l'autre.

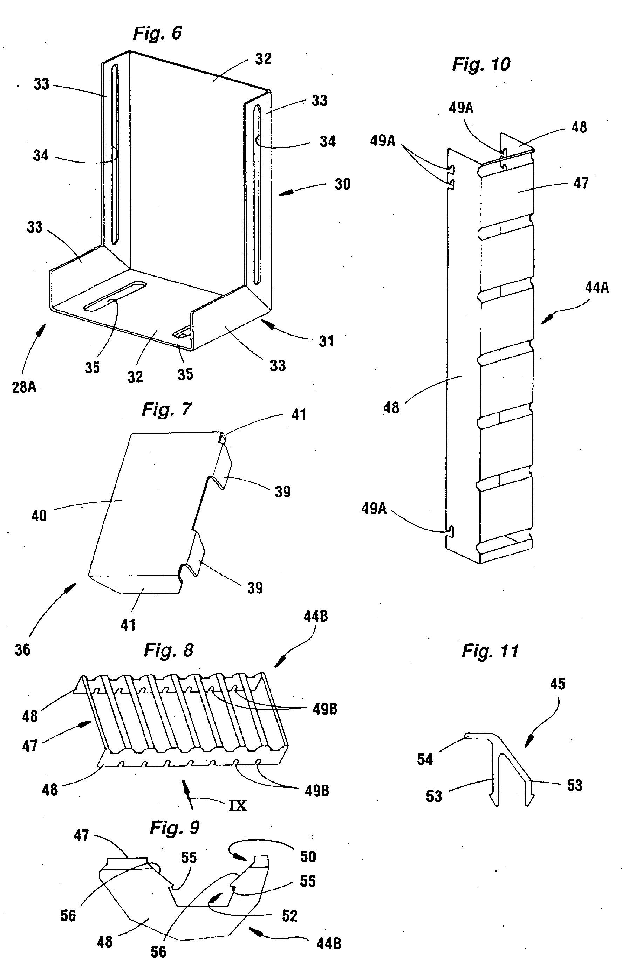

Seul l'un de ces embouts 28A, 28B, en l'espèce l'embout 28A associé à la branche de support 20A, sera décrit dans ce qui suit, en référence, notamment, à la figure 6.

Dans la forme de réalisation représentée, cet embout 28A présente, à la manière du pied 20, deux branches 30, 31 qui forment un dièdre entre elles, à savoir une branche d'engagement 30, par laquelle il est en prise avec la branche de support 20A correspondante du pied 20, et une branche d'appui 31, par laquelle il est apte à porter contre une quelconque surface, en l'espèce le sol 12.

Comme pour le pied 20, le dièdre formé par les deux branches 30, 31 est en pratique un dièdre droit.

Autrement dit, ces deux branches 30, 31 sont d'équerre l'une avec l'autre, et l'embout 28A a ainsi globalement une configuration en L.

Comme pour le pied 20, les deux branches 30, 31 de l'embout 28A sont, en pratique, d'un seul tenant l'une avec l'autre, et chacune d'elles comporte, suivant un profil en U dont la concavité est tournée vers l'intérieur, une paroi médiane 32 et deux ailes latérales 33.

Pour la branche d'engagement 30, les deux ailes latérales 33 sont chacune ajourées, longitudinalement, pour des raisons qui apparaîtront ci-après, par une boutonnière 34 qui court sur une partie au moins de leur longueur.

Pour la branche d'appui 31, c'est la paroi médiane 32 qui est ajourée par au moins une boutonnière 35, pour le passage d'un quelconque organe de fixation, non représenté, propre à permettre de fixer l'ensemble au sol 12 si désiré.

Par exemple, et tel que représenté, deux boutonnières 35 sont prévues, parallèlement l'une à l'autre, à distance l'une de l'autre.

Comme le pied 20, l'embout 28A est, par exemple, réalisé en métal, par découpe et pliage appropriés d'un flan initialement plat.

Par sa branche d'engagement 30, l'embout 28A est engagé de manière télescopique dans la branche de support 20A du pied 20, avec sa paroi médiane 32 au contact de la paroi de façade 22A de cette branche de support 20A et ses ailes latérales 33 au contact des ailes latérales 23A de cette dernière, et il est apte à être bloqué en position sur cette branche de support 20A du pied 20 par au moins un quelconque organe de fixation approprié, en l'espèce une vis 26, celle-ci intéressant successivement une aile latérale 33 de sa branche d'engagement 30, à la faveur de la boutonnière 34 de celle-ci, et l'aile latérale 23A correspondante de la branche de support 20A du pied 20, à la faveur d'un perçage 24 ou d'une boutonnière 25 de cette dernière.

En pratique, deux vis 26, au moins, sont prévues, à raison d'une de chaque côté de l'embout 28A.

Dans la forme de réalisation représentée, les moyens de fixation 21 prévus pour permettre d'assujettir au pied 20 une goulotte 10 comportent une console 36 apte à être rapportée en façade sur la branche de support 20A de ce pied 20.

Préférentiellement, et cela est le cas dans la forme de réalisation représentée, cette console 36 est réglable en position suivant la hauteur de la branche de support 20A du pied 20.

Par exemple, et tel que représenté, la branche de support 20A du pied 20 présente, pour ce faire, au moins une série d'évidements 37, qui sont échelonnés sur sa hauteur, et la console 36 présente, en correspondance, au moins une patte 39, par laquelle elle est apte à se crocheter sur cette branche de support 20A à la faveur d'un de ces évidements 37.

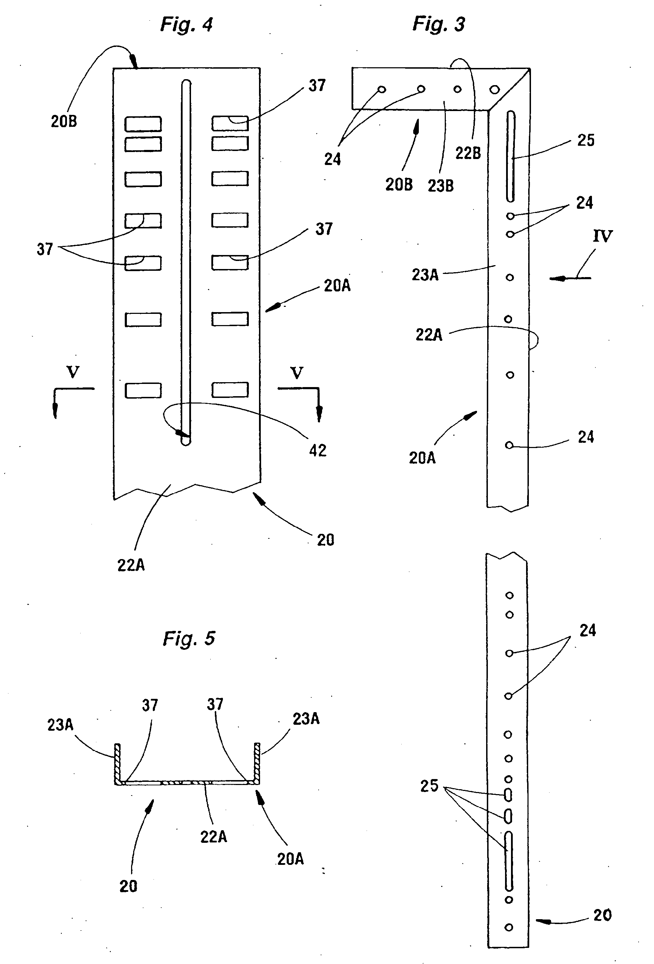

Préférentiellement, et cela est le cas dans la forme de réalisation représentée, la branche de support 20A du pied 20 présente, parallèlement l'une à l'autre, deux séries d'évidements 37, figure 4, et la console 36 présente, en correspondance, deux pattes 39, figure 7.

En pratique, les évidements 37 n'interviennent que sur la partie haute de la branche de support 20A du pied 20, c'est-à-dire sur la partie de cette branche de support 20A adjacente à la branche d'écartement 20B associée.

Dans la forme de réalisation représentée, ces évidements 37 ont un contour rectangulaire, et ils sont établis deux à deux à une même hauteur d'une série à l'autre, pour intervenir à la manière d'une crémaillère.

Toutefois, leur répartition sur la hauteur de la branche de support 20A du pied 20 n'est pas nécessairement régulière.

Au contraire, choisie pour correspondre aux dimensions des goulottes 10 susceptibles d'être concernées, cette répartition est en pratique irrégulière.

Corollairement, dans la forme de réalisation représentée, la console 36 se réduit à une simple platine 40, dont la largeur est sensiblement égale à celle du pied 20, avec, le long de chacun de ses bords latéraux, pour son maintien à l'horizontale par contact avec ce pied 20, un bord tombé 41.

A la manière d'un tel bord tombé 41, les pattes 39 forment chacune un retour en équerre par rapport à la platine 40.

Dans la forme de réalisation représentée, les moyens de fixation 21 comportent, également, sur la branche de support 20A du pied 20, au moins une boutonnière 42, qui évide en façade cette branche de support 20A sur une partie au moins de sa hauteur, et qui est propre au passage d'un quelconque organe de fixation non représenté, une vis par exemple.

Par exemple, et tel que représenté, cette boutonnière 42 s'étend dans la zone médiane de la paroi de façade 22A de la branche de support 20A du pied 20, à la partie haute de celle-ci, entre les deux séries d'évidements 37.

Dans la forme de réalisation représentée, à l'une au moins des branches 20A, 20B du pied 20 est associé au moins un support de lamelle(s) 44A, 44B, qui est apte à lui être assujetti, en s'étendant sur une partie au moins de sa longueur, et qui est propre à recevoir transversalement au moins une lamelle 45, 45'.

En pratique, et tel que représenté, il est associé un support de lamelle(s) 44A, 44B à chacune des branches 20A, 20B du pied 20.

En pratique, également, ces supports de lamelle(s) 44A, 44B ont des structures semblables.

Ils comportent, chacun, suivant un profil en U propre à leur permettre d'être engagés sur la branche 20A, 20B correspondante du pied 20, une paroi de façade 47 et deux ailes latérales 48, avec, sur chacune de ces ailes latérales 48, pour leur assujettissement à la branche 20A, 20B correspondante du pied 20, au moins un évidement 49A, 49B propre au passage d'un quelconque organe de fixation, en l'espèce une vis 26.

En pratique, pour le support de lamelle(s) 44B associé à la branche d'écartement 20B du pied 20, plusieurs évidements 49B sont prévus, en étant régulièrement répartis suivant la longueur de ce support de lamelle(s) 44B, et il s'agit de simples encoches.

Corollairement, pour le support de lamelle(s) 44A, il n'est prévu des évidements 49A qu'aux extrémités, et il s'agit d'encoches en baïonnette.

Pour la mise en place d'une lamelle 45, 45', chaque support de lamelle(s) 44A, 44B comporte une échancrure 50, qui évide sa paroi de façade 47 sur toute la largeur de celle-ci, et qui se prolonge, sur chacune de ses ailes latérales 48, par une encoche 52 propre à l'encliquetage d'une telle lamelle 45, 45'.

Préférentiellement, et cela est le cas dans la forme de réalisation représentée, d'un support de lamelle(s) 44A, 44B à l'autre, les échancrures 50 propres à la mise en place d'une lamelle 45, 45' sont identiques entre elles.

Ainsi, ces supports de lamelle(s) 44A, 44B peuvent indifféremment recevoir au moins une lamelle 45 ou au moins une lamelle 45'.

Ces lamelles 45, 45' ont, elles-mêmes, globalement, une même structure.

Elles comportent, chacune, d'une part, deux jambages 53, dont l'un au moins est élastiquement déformable, et qui sont chacun conformés en crochet à leur extrémité, et, d'autre part, transversalement par rapport aux jambages 53, un flasque 54.

Pour une lamelle 45, figure 11, ce flasque 54 est relativement court et il s'étend tout entier d'un même côté des jambages 53.

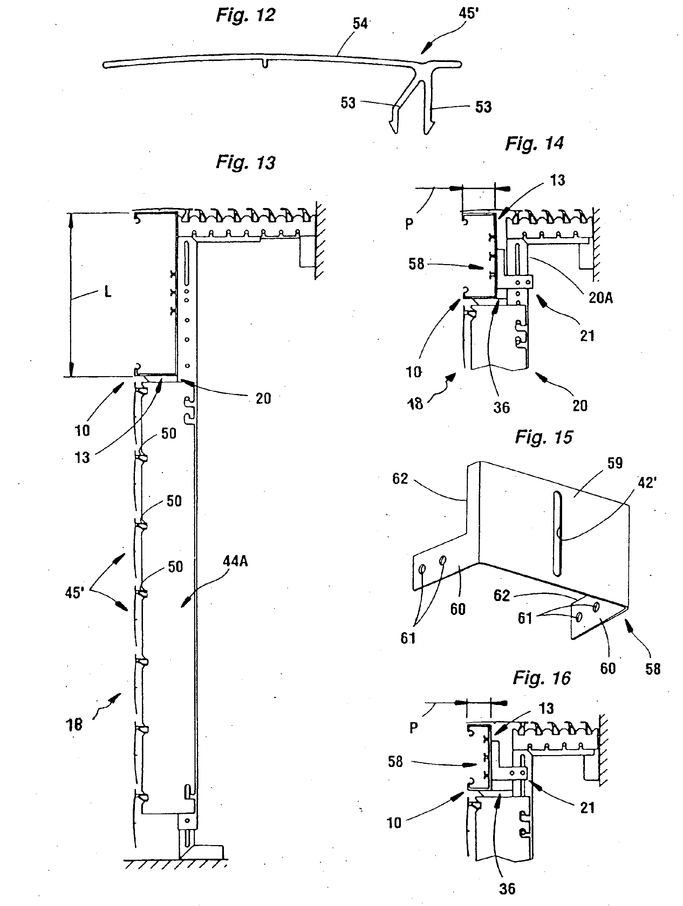

Pour une lamelle 45', figure 12, il est beaucoup plus long et il s'étend de part et d'autre des jambages 53, en étant plus long d'un côté de ceux-ci que de l'autre.

Quoi qu'il en soit, pour coopérer, en encliquetage, avec les jambages 53 de ces lamelles 45, 45', les encoches 52 des supports de lamelle(s) 44A, 44B forment, latéralement, des crans 55 précédés chacun d'un chanfrein d'engagement 56, figure 9.

En pratique, pour la branche d'écartement 20B du pied 20, seul un support de lamelle(s) 44B est prévu, et la longueur de celui-ci est choisie pour correspondre à la distance de pose D à respecter.

Ce support de lamelle(s) 44B comporte, alors, de place en place, suivant un pas régulier, plusieurs échancrures 50.

Préférentiellement, les lamelles qui y sont mises en place sont des lamelles 45 à flasque 54 relativement court.

Toutefois, la lamelle de rive, c'est-à-dire celle la plus éloignée du mur 11, est, préférentiellement, une lamelle 45' à flasque 54 relativement long.

Pour la branche de support 20A du pied 20, un ou plusieurs supports de lamelle(s) 45A peuvent être prévus, en étant convenablement répartis sur la hauteur de cette branche de support 20A.

Il peut s'agir, aussi bien, d'un support de lamelle(s) 44A ne comportant qu'une échancrure 50, que de supports de lamelle(s) 44A comportant, réparties régulièrement, plusieurs échancrures 50.

Mais, préférentiellement, les lamelles mises en place dans ces échancrures 50 sont alors des lamelles 45' à flasque 54 relativement long.

Au montage, le pied 20 du support de goulotte 18 suivant l'invention est d'abord mis en place, avec un réglage en position approprié de ses embouts 28A, 28B pour satisfaire à la distance de pose D et à la hauteur de pose H à respecter.

La console 36 est ensuite installée sur la branche de support 20A de ce pied 20, à une distance de sa branche d'écartement 20B choisie de manière à ce que, une fois posée sur elle, la goulotte 10 affleure sensiblement avec la surface supérieure de cette branche d'écartement 20B, en dépassant toutefois légèrement de celle-ci.

Par exemple, et tel que représenté, la console 36 est mise en place suivant une position pour laquelle c'est par sa platine 40 qu'elle reçoit la goulotte 10.

En variante, elle peut être mise en place suivant une position inverse de la précédente.

Elle reçoit alors de chant la goulotte 10, par ses bords tombés 41.

Cette position de la console 36 autorise d'ailleurs avantageusement la présence à son droit d'accessoires de jonction de goulottes, lorsqu'il est nécessaire de joindre bout à bout deux goulottes 10, et la jonction correspondante se fait alors avantageusement au droit d'un support de goulotte 18, au bénéfice de la rigidité.

Quoi qu'il en soit, il suffit, ensuite, de fixer la goulotte 10, ou, plus précisément, le socle 13 de celle-ci, à la branche de support 20A du pied 20, à la faveur de la boutonnière 42 prévue à cet effet sur cette dernière.

Il suffit, enfin, de rapporter, sur les branches 20A, 20B du pied 20, des supports de lamelle(s) 44A, 44B, et d'équiper ceux-ci de lamelles 45, 45'.

Pour le support de lamelle(s) 44A, sont mises en oeuvre des lamelles 45', avec leur flasque 54 dirigé vers le sol 12.

Pour le support de lamelle(s) 44B, sont mises en oeuvre, d'une part, au droit de la goulotte 10, une lamelle 45', et, d'autre part, à compter de celle-ci et jusqu'au mur 11, des lamelles 45.

Par exemple, et tel que représenté, le flasque 54 de ces lamelles 45 est alors dirigé à l'opposé du mur 11, comme celui de la lamelle 45'.

En variante, les lamelles 45 peuvent être mises en place suivant une position pour laquelle, à l'inverse de celle représentée, leur flasque 54 est dirigé vers le mur 11.

En pratique, le ou les supports de lamelle(s) 44A associés à la branche de support 20A du pied 20 sont simplement suspendus par leurs évidements 49A à des vis 26, qui sont en prise avec les ailes latérales 23A de cette branche de support 20A du pied 20, et dont certaines, à la base de ces dernières, assurent conjointement le blocage en position de l'embout 28A associé, sans qu'il y ait nécessairement un serrage de ces vis 26.

Au contraire, pour un accès aisé au volume normalement caché par les lamelles 45' correspondantes, en vue par exemple de la maintenance du radiateur formant éventuellement l'obstacle contourné, l'un et/ou l'autre des supports de lamelle(s) 44A peuvent être montés pivotants sur de telles vis 26 à leur partie inférieure, tout en étant retenus, à leur partie supérieure, par une chaînette non représentée.

Pour le support de lamelle(s) 44B associé à la branche d'écartement 20B du pied 20, ce support de lamelle(s) 44B peut corollairement être engagé par tel ou tel de ses évidements 49B sur des vis 26, qui sont en prise avec les ailes latérales 23B de cette branche d'écartement 20B, et dont certaines assurent conjointement le blocage en position de l'embout 28B associé.

Mais, aucun démontage n'étant en principe prévu à ce niveau, ces vis 26 peuvent, elles, être serrées.

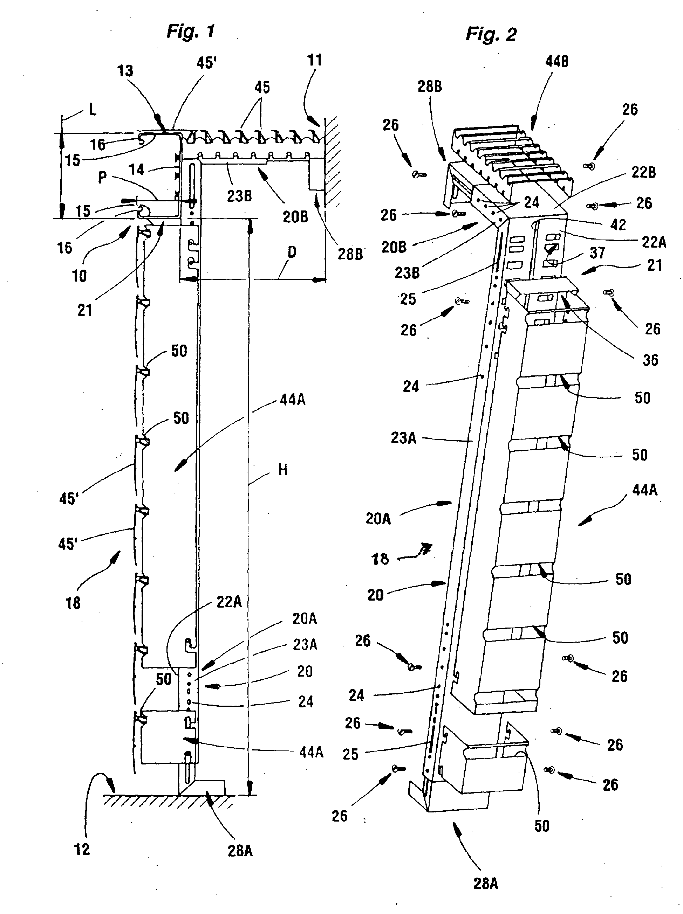

Dans la forme de mise en oeuvre représentée sur les figures 1 à 12, qui correspond à une goulotte 10 de largeur ou hauteur L relativement faible, et, donc, à une hauteur de pose H par rapport au sol 12 relativement importante, deux supports de lamelle(s) 44A ont été prévus, à distance l'un de l'autre, à savoir, un support de lamelle(s) 44A supérieur, qui comporte plusieurs échancrures 50 pour la mise en oeuvre d'autant de lamelles 45', et un support de lamelle(s) 44A inférieur, qui ne comporte, lui, qu'une échancrure 50 pour la mise en place d'une seule lamelle 45'.

En variante, dans la forme de mise en oeuvre représentée sur la figure 13, qui correspond à une goulotte 10 de largeur ou hauteur L relativement importante, seul un support de lamelle(s) 44A comportant plusieurs échancrures 50 est prévu.

Dans les formes de mise en oeuvre représentées sur les figures 14 à 16, qui correspondent à des goulottes 10 de profondeur P relativement faible, les moyens de fixation 21 prévus pour assujettir au pied 20 une telle goulotte 10 comportent une entretoise 58, qui est apte à être rapportée en façade sur la branche de support 20A de ce pied 20, avec, sur cette entretoise 58, figure 15, au moins une boutonnière 42', qui évide en façade cette entretoise 58, et qui, en substitution à la boutonnière 42 de la branche de support 20A du pied 20, est propre au passage d'un quelconque organe de fixation non représenté, en pratique une simple vis.

Dans la forme de réalisation représentée, cette entretoise 58 comporte, suivant un profil en U, une paroi de façade 59 et deux ailes latérales 60, avec, sur chacune de ces ailes latérales 60, pour son assujettissement à la branche de support 20A du pied 20, au moins un perçage 61 propre au passage d'un quelconque organe de fixation, en pratique une vis 26.

Préférentiellement, et cela est le cas dans la forme de réalisation représentée, l'entretoise 58 comporte, sur chacune de ses ailes latérales 60, au moins deux perçages 61 échelonnés transversalement par rapport à sa paroi de façade 59.

Suivant la profondeur P de la goulotte 10, il est ainsi possible de mettre à profit l'un de ces perçages 61, figure 14, ou l'autre de ceux-ci, figure 16.

Dans l'un et l'autre cas, la goulotte 10, ou, plus précisément, le socle 13 de celle-ci, est adossé à l'entretoise 58, en reposant, comme précédemment, sur la console 36, et en étant assujetti à cette entretoise 58 à la faveur de la boutonnière 42' de celle-ci.

Dans la forme de réalisation représentée, chacune des ailes latérales 60 de l'entretoise 58 comporte une échancrure 62, qui affecte tant son bord libre que l'un de ses bords latéraux, en l'espèce son bord latéral supérieur, pour éviter toute interférence éventuelle avec le support de lamelle(s) 44B associé à la branche d'écartement 20B du pied 20.

## Revendications

1. Support de goulotte du genre comportant un pied (20) présentant deux branches (20A, 20B) qui forment un dièdre entre elles, à savoir une branche de support (20A), pour appui sur le sol (12), et une branche d'écartement (20B), pour appui sur un mur (11), et des moyens de fixation (21) propres à permettre d'assujettir à ce pied (20) une goulotte (10) et qui interviennent sur la branche de support (20A) de ce pied (20), **caractérisé en ce que** les moyens de fixation (21) comportent une console (36) apte à être rapportée en façade sur la branche de support (20A) du pied (20).

2. Support de goulotte suivant la revendication 1, **caractérisé en ce que** la console (36) est réglable en position suivant la hauteur de la branche de support (20A) du pied (20).

3. Support de goulotte suivant la revendication 2, **caractérisé en ce que** la branche de support (20A) du pied (20) présente au moins une série d'évidements (37), qui sont échelonnés sur sa hauteur, et la console (36) présente, en correspondance, au moins une patte (39), par laquelle elle est apte à se crocheter sur cette branche de support (20A) à la faveur d'un de ces évidements (37).

4. Support de goulotte suivant la revendication 3, **caractérisé en ce que** la branche de support (20A) du pied (20) présente, parallèlement l'une à l'autre, deux séries d'évidements, (37), et la console (36) présente, en correspondance, deux pattes (39).

5. Support de goulotte suivant l'une quelconque des revendications 1 à 4, **caractérisé en ce que** les moyens de fixation (21) comportent, sur la branche de support (20A) du pied (20), au moins une boutonnière (42), qui évide en façade cette branche de support (20A) sur une partie au moins de sa hauteur, et qui est propre au passage d'un quelconque organe de fixation.

6. Support de goulotte suivant les revendications 4 et 5, prises conjointement, **caractérisé en ce que** la boutonnière (42) s'étend dans la zone médiane de la paroi de façade (22A) de la branche de support (20A) du pied (20), entre les deux séries d'évidements (37).

7. Support de goulotte suivant l'une quelconque des revendications 1 à 6, **caractérisé en ce que** les moyens de fixation (21) comportent une entretoise (58), qui est apte à être rapportée en façade sur la branche de support (20A) du pied (20), avec, sur cette entretoise (58), au moins une boutonnière (42'), qui évide en façade cette entretoise (58), et qui est propre au passage d'un quelconque organe de fixation

8. Support de goulotte suivant la revendication 7, **caractérisé en ce que** l'entretoise (58) comporte, suivant un profil en U, une paroi de façade (59) et deux ailes latérales (60), avec, sur chacune de ces ailes latérales (60), pour son assujettissement à la branche de support (20A) du pied (20), au moins un perçage (61) propre au passage d'un quelconque organe de fixation.

9. Support de goulotte suivant la revendication 8, **caractérisé en ce que** l'entretoise (58) comporte, sur chacune de ses ailes latérales (60), au moins deux perçages (61) échelonnés transversalement par rapport à sa paroi de façade (59).

10. Support de goulotte suivant l'une quelconque des revendications 8, 9, **caractérisé en ce que** chacune des ailes latérales (60) de l'entretoise (58) comporte une échancrure (62), qui affecte tant son bord libre que l'un de ses bords latéraux.

11. Support de goulotte suivant l'une quelconque des revendications 1 à 10, **caractérisé en ce que** l'une au moins des branches (20A, 20B) du pied (20) se prolonge par un embout (28A, 28B) monté réglable en position sur une telle branche (20A, 20B) suivant la longueur de celle-ci.

12. Support de goulotte suivant la revendication 11, **caractérisé en ce que** l'embout (28A, 28B) est apte à être bloqué en position par au moins un quelconque organe de fixation.

13. Support de goulotte suivant l'une quelconque des revendications 11, 12, **caractérisé en ce que** l'embout (28A, 28B) présente deux branches (30, 31) qui forment un dièdre entre elles, à savoir une branche d'engagement (30), par laquelle il est en prise avec la branche (20A, 20B) correspondante du pied (20), et une branche d'appui (31), par laquelle il est apte à porter contre une quelconque surface.

14. Support de goulotte suivant l'une quelconque des revendications 11 à 13, **caractérisé en ce que** chacune des branches (20A, 20B) du pied (20) se prolonge par un embout (28A, 28B).

15. Support de goulotte suivant la revendication 14, **caractérisé en ce que** les deux embouts (28A, 28B) sont identiques l'un à l'autre.

16. Support de goulotte suivant l'une quelconque des revendications 1 à 15, **caractérisé en ce que,** à l'une au moins des branches (20A, 20B) du pied (20) est associé au moins un support de lamelle(s) (44A, 44B), qui est apte à lui être assujetti, en s'étendant sur une partie au moins de sa longueur, et qui est propre à recevoir transversalement au moins une lamelle (45, 45').

17. Support de goulotte suivant la revendication 16, **caractérisé en ce que** le support de lamelle(s) (44A, 44B) comporte, suivant un profil en U, une paroi de façade (47) et deux ailes latérales (48), avec, sur chacune de ces ailes latérales (48), pour son assujettissement à la branche (20A, 20B) correspondante du pied (20), au moins un évidement (49A, 49B) propre au passage d'un quelconque organe de fixation.

18. Support de goulotte suivant la revendication 17, **caractérisé en ce que,** pour la mise en place d'une lamelle (45, 45'), le support de lamelle(s) (44A, 44B) comporte une échancrure (50), qui évide sa paroi de façade (47) sur toute la largeur de celle-ci, et qui se prolonge, sur chacune de ses ailes latérales (48), par une encoche (52) propre à l'encliquetage d'une telle lamelle (45, 45').

19. Support de goulotte suivant l'une quelconque des revendications 16 à 18, **caractérisé en ce qu'**il est associé un support de lamelle(s) (44A, 44B) à chacune des branches (20A, 20B) du pied (20).

20. Support de goulotte suivant la revendication 19, **caractérisé en ce que,** d'un support de lamelle(s) (44A, 44B) à l'autre, les échancrures (50) propres à la mise en place d'une lamelle (45, 45') sont identiques entre elles.

21. Support de goulotte suivant l'une quelconque des revendications 1 à 20, **caractérisé en ce que** chacune des branches (20A, 20B) du pied (20) comporte, suivant un profil en U, une paroi de façade (22A, 22B) et deux ailes latérales (23A, 23B), avec, échelonnés sur sa longueur sur chacune de ces ailes latérales (23A, 23B), une pluralité d'évidements, tels que perçages (24) ou boutonnières (25), propres chacun au passage d'un quelconque organe de fixation.

22. Support de goulotte suivant l'une quelconque des revendications 1 à 21, **caractérisé en ce que** les deux branches (20A, 20B) du pied (20) sont d'un seul tenant l'une avec l'autre.

## Claims

1. A duct support of the kind comprising a foot (20) having two arms (20A, 20B) which form a dihedron between them, namely a support arm (20A) for bearing against the ground (12) and a spacing arm (20B) for bearing against a wall (11), and fixing means (21) which are adapted to permit a duct (10) to be fastened to said foot (20) and which are operative on the support arm (20A) of said foot (20), **characterised in that** the fixing means (21) comprise a bracket (36) adapted to be fitted in frontal relationship on the support arm (20A) of the foot (20).

2. A duct support according to claim 1, **characterised in that** the bracket (36) is adjustable in position in accordance with the height of the support arm (20A) of the foot (20).

3. A duct support according to claim 2, **characterised in that** the support arm (20A) of the foot (20) has at least one series of openings (37) disposed at spacings over its height and the bracket (36) has in corresponding relationship at least one lug (39), by way of which it is adapted to be hooked on said support arm (20A) by means of one of said openings (37).

4. A duct support according to claim 3, **characterised in that** the support arm (20A) of the foot (20) has two series of openings (37) in mutually parallel relationship and the bracket (36) has two lugs (39) in corresponding relationship.

5. A duct support according to any one of claims 1 to 4, **characterised in that** on the support arm (20A) of the foot (20), the fixing means (21) comprise at least one keyhole opening (42) which apertures in frontal relationship said support arm (20A) over a part at least of its height and which is suitable for the passage of any fixing member therethrough.

6. A duct support according to claims 4 and 5 in combination, **characterised in that** the keyhole opening (42) extends in the central zone of the front wall (22A) of the support arm (20A) of the foot (20) between the two series of openings (37).

7. A duct support according to any one of claims I to 6, **characterised in that** the fixing means (21) comprise a brace (58) which is adapted to be fitted in frontal relationship on the support arm (20A) of the foot (20) with, on said brace (58), at least one keyhole opening (42') which apertures said brace (58) in frontal relationship and which is suitable for the passage of any fixing member therethrough.

8. A duct support according to claim 7, **characterised in that** the brace (58) comprises, in a U-shaped profile, a front wall (59) and two lateral limbs (60) with, on each of said lateral limbs (60), for fastening thereof to the support arm (20A) of the foot (20), at least one orifice (61) suitable for the passage of any fixing member therethrough.

9. A duct support according to claim 8, **characterised in that** on each of its lateral limbs (60) the brace (58) comprises at least two orifices (61) which are spaced transversely with respect to its front wall (59).

10. A duct support according to either one of claims 8 and 9, **characterised in that** each of the lateral limbs (60) of the brace (58) comprises a notch (62) which involves both its free edge and one of its lateral edges.

11. A duct support according to any one of claims 1 to 10, **characterised in that** one at least of the arms (20A, 20B) of the foot (20) is prolonged by an end portion (28A, 28B) mounted adjustably in position on such an arm (20A, 20B) along the length thereof.

12. A duct support according to claim 11, **characterised in that** the end portion (28A, 28B) is adapted to be locked in position by at least one any fixing member.

13. A duct support according to either one of claims 11 and 12, **characterised in that** the end portion (28A, 28B) has two arms (30, 31) which form a dihedron between them, namely an engagement arm (30) by way of which it is in engagement with the corresponding arm (20A, 20B) of the foot (20) and a support arm (31) by way of which it is adapted to bear against any surface.

14. A duct support according to any one of claims 11 to 13, **characterised in that** each of the arms (20A, 20B) of the foot (20) is prolonged by an end portion (28A, 28B).

15. A duct support according to claim 14, **characterised in that** the two end portions (28A, 28B) are identical to each other.

16. A duct support according to any one of claims 1 to 15, **characterised in that** associated with one at least of the arms (20A, 20B) of the foot (20) there is at least one support (44A, 44B) for a slat or slats, which is adapted to be fastened thereto, extending over a part at least of its length, and which is suitable for transversely receiving at least one slat (45, 45').

17. A duct support according to claim 16, **characterised in that** the support (44A, 44B) for a slat or slats comprises, in a U-shaped profile, a front wall (47) and two lateral limbs (48) with, on each of said lateral limbs (48), for fastening thereof to the corresponding arm (20A, 20B) of the foot (20), at least one opening (49A, 49B) suitable for the passage of any fixing member therethrough.

18. A duct support according to claim 17, **characterised in that** for fitting a slat (45, 45') the support (44A, 44B) for the slat or slats comprises a notch (50) which apertures its front wall (47) over the entire width thereof and which is prolonged on each of its lateral limbs (48) by a recess (52) suitable for latching engagement of such a slat (45, 45').

19. A duct support according to any one of claims 16 to 18, **characterised in that** a support (44A, 44B) for a slat or slats is associated with each of the arms (20A, 20B) of the foot (20).

20. A duct support according to claim 19, **characterised in that,** from one support (44A, 44B) for a slat or slats to the other, the notches (50) suitable for fitting a slat (45, 45') are identical to each other.

21. A duct support according to any one of claims 1 to 20, **characterised in that** each of the arms (20A, 20B) of the foot (20) comprises, in a U-shaped profile, a front wall (22A, 22B) and two lateral limbs (23A, 23B) with in spaced relationship over its length on each of said lateral limbs (23A, 23B) a plurality of openings such as orifices (24) or keyhole openings (25) each suitable for the passage of any fixing member therethrough.

22. A duct support according to any one of claims 1 to 21, **characterised in that** the two arms (20A, 20B) of the foot (20) are in one piece with each other.

## Patentansprüche

1. Kabelkanalträger von der Art mit einem Fuß (20), der zwei Schenkel (20A, 20B) aufweist, die miteinander einen Flächenwinkel bilden, nämlich einen Tragschenkel (20A) zur Anlage am Boden (12) und einen Abstandsschenkel (20B) zur Anlage an einer Wand (11), und mit Befestigungsmitteln (21), welche die Befestigung eines Kabelkanals (10) am Fuß (20) zulassen und die am Tragschenkel (20A) des Fußes (20) angeordnet sind,
**dadurch gekennzeichnet, dass** die Befestigungsmittel (21) eine Konsole (36) aufwelsen, die auf dem Tragschenkel (20A) des Fußes (20) stirnseitig aufgesetzt zu werden vermag.

2. Kabelkanalträger nach Anspruch 1,
**dadurch gekennzeichnet, dass** die Konsole (36) entsprechend der Höhe des Tragschenkels (20A) des Fußes (20) in der Position verstellbar ist.

3. Kabelkanalträger nach Anspruch 2,
**dadurch gekennzeichnet, dass** der Tragschenkel (20A) des Fußes (20) wenigstens eine Reihe von Aussparungen (37) aufweist, die über dessen Höhe verteilt sind, und die Konsole (36) In Übereinstimmung hierzu wenigstens eine Lasche (39) aufweist, mit der diese sich mittels einer der Aussparungen (37) an dem Tragschenkel (20A) einzuhaken vermag.

4. Kabelkanalträger nach Anspruch 3,
**dadurch gekennzeichnet, dass** der Tragschenkel (20A) des Fußes (20) parallel zueinander zwei Reihen von Aussparungen (37) aufweist, und die Konsole (20) in Übereinstimmung hierzu zwei Laschen (39) aufweist.

5. Kabelkanalträger nach einem der Ansprüche 1 bis 4,
**dadurch gekennzeichnet, dass** die Befestigungsmittel (21) auf dem Tragschenkel (20A) des Fußes (20) wenigstens einen Längsschlitz (42) aufweisen, der den Tragschenkel (20A) stirnseitig über wenigstens einen Teil seiner Höhe durchbricht, und der zum Hindurchführen eines beliebigen Befestigungsorgans geeignet ist.

6. Kabelkanalträger nach den Ansprüchen 4 und 5 in Verbindung miteinander,
**dadurch gekennzeichnet, dass** sich der Längsschlitz (42) im mittleren Bereich der Stirnwand (22A) des Tagschenkels (20A) des Fußes (20) zwischen zwei Reihen von Aussparungen (37) erstreckt.

7. Kabelkanalträger nach einem der Ansprüche 1 bis 6,
**dadurch gekennzeichnet, dass** die Befestigungsmittel (21) ein Abstandsstück (58) umfassen, das stirnseitig auf den Tragschenkel (20A) des Fußes (20) aufgesetzt zu werden vermag, wobei auf dem Abstandsstück (58) wenigstens ein Längsschlitz (42'), der zum Hindurchführen eines beliebigen Befestigungsorgans geeignet ist, stirnseitig dieses Abstandsstück (58) durchbricht.

8. Kabelkanalträger nach Anspruch 7,
**dadurch gekennzeichnet, dass** das Abstandsstück (58) gemäß einem U-förmlgen Profil eine Stirnwand (59) und zwei Seitenarme (60) umfasst, mit wenigstens einer Bohrung (61) auf jedem der Seitenarme (60), die zum Hindurchführen eines beliebigen Befestigungsorgans geeignet ist, um an dem Tragschenkel (20A) des Fußes (20) befestigt zu werden.

9. Kabelkanalträger nach Anspruch 8,
**dadurch gekennzeichnet, dass** das Abstandsstück (58) auf jedem seiner Seitenarme (60) wenigstens zwei Bohrungen (61) aufweist, die bezüglich seiner Stirnwand (59) quer verteilt sind.

10. Kabelkanalträger nach einem der Ansprüche 8, 9,
**dadurch gekennzeichnet, dass** jeder Seitenarm (60) des Abstandsstücks (58) einen Ausschnitt (62) aufweist, der sowohl dessen freiem Rand als auch einem der Seitenränder zuzuordnen ist.

11. Kabelkanalträger nach einem der Ansprüche 1 bis 10,
**dadurch gekennzeichnet, dass** wenigstens einer der Schenkel (20A, 20B) des Fußes (20) durch ein Endstück (28A, 28B) verlängert ist, das an einem derartigen Schenkel (20A, 20B) entsprechend dessen Länge In der Position verstellbar angebracht Ist.

12. Kabelkanalträger nach Anspruch 11,
**dadurch gekennzeichnet, dass** das Endstück (28A, 28B) durch wenigstens ein Befestlgungsorgan in seiner Position arretiert zu werden vermag.

13. Kabelkanalträger nach einem der Ansprüche 11, 12,
**dadurch gekennzeichnet, dass** das Endstück (28A, 28B) zwei Schenkel (30, 31) umfasst, die miteinander einen Flächenwinkel bilden, nämlich einen Eingriffsschenkel (30), mit dem es mit dem entsprechenden Schenkel (20A, 20B) des Fußes (20) in Eingriff ist, und einen Auflageschenkel (31), mit dem es gegen eine beliebige Oberfläche anzuliegen vermag.

14. Kabelkanalträger nach einem der Ansprüche 11 bis 13,
**dadurch gekennzeichnet, dass** jeder der Schenkel (20A, 20B) des Fußes (20) durch ein Endstück (28A, 28B) verlängert ist.

15. Kabelkanalträger nach Anspruch 14,
**dadurch gekennzeichnet, dass** die beiden Endstücke (28A, 28B) miteinander Identisch sind.

16. Kabelkanalträger nach einem der Ansprüche 1 bis 15,
**dadurch gekennzeichnet, dass** wenigstens einem der Schenkel (20A, 20B) des Fußes (20) wenigstens ein Lamellenträger (44A, 44B) zugeordnet ist, der an diesem befestigt zu werden vermag und sich dabei über wenigstens einen Teil von dessen Länge erstreckt und der wenigstens eine Lamelle (45, 45') quer aufzunehmen vermag.

17. Kabelkanalträger nach Anspruch 16,
**dadurch gekennzeichnet, dass** der Lamellenträger (44A, 44B) gemäß einem U-förmigen Profil eine Stirnwand (47) und zwei Seitenarme (48) umfasst, mit wenigstens einer Aussparung (49A, 49B), die zum Hindurchführen eines beliebigen Befestigungsorgans geeignet Ist, auf jedem der Seitenarme (48), um an dem entsprechenden Schenkel (20A, 20B) des Fußes (20) befestigt zu werden.

18. Kabelkanalträger nach Anspruch 17,
**dadurch gekennzeichnet, dass** der Lamellenträger (44A, 44B) zum Anbringen einer Lamelle (45, 45') einen Einschnitt (50) aufweist, der dessen Stirnwand (47) über die gesamt Breite durchbricht und sich auf jedem der Seitenarme (48) in einer Einkerbung (52) fortsetzt, die zum Einrasten einer derartigen Lamelle (45, 45') geeignet ist.

19. Kabelkanalträger nach einem der Ansprüche 16 bis 18,
**dadurch gekennzeichnet, dass** jedem der Schenkel (20A, 20B) des Fußes (20) ein Lamellenträger (44A, 44B) zugeordnet ist.

20. Kabelkanalträger nach Anspruch 19,
**dadurch gekennzeichnet, dass** die zum Anbringen einer Lamelle geeigneten Einschnitte (50) von einem Lamellenträger (44A, 44B) zum anderen miteinander identisch sind.

21. Kabelkanalträger nach einem der Ansprüche 1 bis 20,
**dadurch gekennzeichnet, dass** jeder Schenkel (20A, 20B) des Fußes (20) gemäß einem U-förmigen Profil eine Stirnwand (22A, 22B) und zwei Seitenarme (23A, 23B) umfasst, mit einer Vielzahl von Aussparungen, die zum Hindurchführen eines beliebigen Befestigungsorgans geeignet sind, etwa Bohrungen (24) oder Längsschlitze (25), die auf jedem der Seitenarme (23A, 23B) über die Schenkellänge verteilt sind.

22. Kabelkanalträger nach einem der Ansprüche 1 bis 21,
**dadurch gekennzeichnet, dass** die beiden Schenkel (20A, 20B) des Fußes (20) einstückig miteinander ausgebildet sind.
